# EUROPÄISCHE PATENTANMELDUNG

(11) **EP 2 832 522 A2**
(43) Veröffentlichungstag der Anmeldung: **04.02.2015**
(21) Anmeldenummer: 14178872.9
(22) Anmeldetag: 29.07.2014
(51) Int. Cl.: B29C 47/10, B29C 47/04, B29C 47/12, B29C 47/40

(54) **Verfahren zur Herstellung eines gefüllten Polymerextrudats**

(30) Priorität: 30.07.2013 DE 102013108165
(71) Anmelder: Leistritz Extrusionstechnik GmbH, 90459 Nürnberg (DE)
(72) Erfinder: Rudersdorf, Tim, 90461 Nürnberg (DE)
(74) Vertreter: Lindner Blaumeier Patent- und Rechtsanwälte

(57) **Zusammenfassung**

Verfahren zur Herstellung eines gefüllten Polymerextrudats, wobei in einem ersten Extruder (2) eine fließfähige Masse aus einem Trägerfluid und diesem beigegebenen Verstärkungs- oder Füllstoffen (9) oder farbgebenden Pigmenten (12) und in einem zweiten Extruder (14) eine Polymerschmelze aus einem thermoplastischen Polymer (16) hergestellt wird, wobei die Masse und die Polymerschmelze anschließend in einem Coextrusionsschritt derart coextrudiert werden, dass die Polymerschmelze die den Kern des erzeugten Extrudatstrangs (22) bildende Masse umschließt.

## Beschreibung

Die Erfindung betrifft ein Verfahren zur Herstellung eines gefüllten Polymerextrudats.

Vornehmlich in der Kunststoff verarbeitenden Industrie werden gefüllte Polymerextrudate als Basis für die Herstellung von Kunststoffbauteilen, entweder bestehend insgesamt aus Kunststoff oder versehen mit einer Kunststoffbeschichtung oder ähnlichem, verwendet. Das Polymerextrudat liegt beispielsweise in Form eines Granulats, beispielsweise eines Stäbchengranulats vor und wird, gegebenenfalls nach Zugabe weiterer Komponenten, üblicherweise in einem Extruder aufgeschmolzen und anschließend je nach Bedarf verarbeitet, beispielsweise durch Spritzen von Bauteilen und ähnlichem.

Zumeist sind an das herzustellende Bauteil bestimmte mechanische, physikalische oder optische Anforderungen gesetzt, die bedingen, dass im Bauteil entsprechende Verstärkungs- oder Füllstoffe oder farbgebende Pigmente vorhanden sind, die die gewünschten Eigenschaften verleihen respektive diesen zuträglich sind. Diese Verstärkungs- oder Füllstoffe oder farbgebende Pigmente müssen zwangsläufig in der Polymerschmelze, aus der das Bauteil gefertigt wird, vorhanden sein. Damit es beim Kunststoff verarbeitenden Betrieb nicht erforderlich ist, die Verstärkungs- oder Füllstoffe respektive farbgebenden Pigmente erst als solche der Polymerschmelze zuzugeben, mithin also vor Ort einem Extruder, sei es ein Einschnecken-, sei es ein Doppelschneckenextruder, zuzuführen, werden sogenannte gefüllte Polymerextrudate, die in der Regel als Granulat vorliegen, verwendet. Diese Vorprodukte, oft auch "Masterbatch" genannt, bestehen aus einem Polymer, beispielsweise Polypropylen, in dem die Verstärkungs- oder Füllstoffe respektive farbgebenden Pigmente bereits in hoher Konzentration aufgenommen sind. Im Kunststoff verarbeitenden Betrieb wird sodann anhand dieser hochgefüllten Polymerextrudate, also dem Masterbatch, und Zugabe weiterer schmelzbildender Komponenten der sogenannte "Compound" im Extruder gebildet, mithin also die fertige Schmelze, in der die Verstärkungs- oder Füllstoffe respektive farbgebenden Pigmente dann in der gewünschten Konzentration vorliegen. Ein Beispiel für solche Verstärkungs- oder Füllstoffe sind Fasern, insbesondere Glasfasern, die im Endprodukt in gewünschter Konzentration und oft auch in einer gewünschten Mindestlänge vorliegen sollen. Ein Beispiel für ein farbgebendes Pigment ist ein Effektpigment, beispielsweise ein Glimmerpigment, das insbesondere aus optischen Gesichtspunkten, da schimmernd, beispielsweise in einer Beschichtung eines Gegenstands verarbeitet wird.

Es ist bekannt, ein gefülltes Polymerextrudats in Form eines Stäbchengranulats mit im Kern des Stäbchengranulats liegenden Glasfaser herzustellen. Zur Herstellung dieses Stäbchengranulats werden Glasfaserrovings abgewickelt und die einzelnen, dünnen Fasern gebündelt und mit dem Polymer komplett umhüllt. Die einzelnen Fasern liegen im Extrudatstrang respektive im anschließend geschnittenen Stäbchengranulat im Wesentlichen parallel verlaufend im Granulatkern. Sie sind außenseitig vollständig vom Polymer umgeben. Zwar kann damit ein mit Langfasern gefülltes Stäbchengranulat hergestellt werden, das in der gewünschten Form weiterverarbeitet werden kann und es ermöglicht, im fertigen Bauteil Glasfasern mit einer gewünschten Mindestlänge vorzufinden, nachdem die Glasfasern beim Aufschmelzen des Stäbchengranulats im verarbeitenden Extruder erst relativ spät in Kontakt mit der Zylinderwand des Extruders, wo sie geschert und damit zerkleinert werden, kommen. Gleichwohl können mit einem solchen Verfahren lediglich derartige Fasern verarbeitet werden, wobei noch dazu spezielle Verarbeitungsdüsen zum Bündeln der Fasern und zum Umhüllen erforderlich sind.

Farbgebende Pigmente, insbesondere in Form von Effektpigmenten, sind in der Handhabung und Verarbeitung problematisch, da sie sehr leicht zerstäuben respektive insbesondere im Falle von Effektpigmenten, die häufig in Form von kleinen Plättchen und ähnlichem vorliegen, leicht zerbrechen. Aus diesem Grund ist es bekannt, beispielsweise Effektpigmente auf kugelförmiges Kunststoffgranulat aufzutrommeln, so dass letztlich kleine Kügelchen entstehen, die im Inneren einen Kunststoffkern besitzen, und außenseitig mit daran nur mechanisch haftenden Pigmenten versehen sind. Werden diese betrommelten Granulate dem Extruder zugeführt, so kann es passieren, dass, nachdem die Pigmente außenseitig liegen, diese schon sehr frühzeitig mit der Zylinderwand in Kontakt kommen und folglich stark gebrochen werden, so dass ihr eigentlicher Effekt im Endprodukt nicht mehr wie gewünscht auftritt.

Der Erfindung liegt damit das Problem zugrunde, ein Verfahren anzugeben, das die Herstellung unterschiedlich gefüllter Polymerextrudate ermöglicht.

Zur Lösung dieses Problems ist bei einem Verfahren zur Herstellung eines gefüllten Polymerextrudats erfindungsgemäß vorgesehen, dass in einem ersten Extruder eine fließfähige Masse aus einem Trägerfluid und diesem beigegebenen Verstärkungs- oder Füllstoffen oder farbgebenden Pigmenten und in einem zweiten Extruder eine Polymerschmelze aus einem thermoplastischem Polymer hergestellt wird, wobei die Masse und die Polymerschmelze anschließend in einem Coextrusionsschritt derart coextrudiert werden, dass die Polymerschmelze die den Kern des erzeugten Extrudatstrangs bildende Masse umschließt.

Das erfindungsgemäße Verfahren sieht die Herstellung eines gefüllten Polymerextrudats durch Coextrusion vor. Hierzu wird eine fließfähige Masse in einem ersten Extruder hergestellt. Diese besteht aus einem Trägerfluid, das sicherstellt, dass die Masse noch hinreichend fluid ist, um vom Extruder zu einer nachgeschalteten Coextrusionsvorrichtung gefördert zu werden. Dem Trägerfluid ist erfindungsgemäß der gewünschte Verstärkungs- oder Füllstoff oder das farbgebende Pigment beigemischt, was durch Aufgabe am ersten Extruder erfolgt. Je nachdem, um welches Material es sich bei dem Verstärkungs- oder Füllstoff respektive dem farbgebenden Pigment handelt, wird der Ort der Aufgabe am Extruder gewählt, um sicherzustellen, dass der jeweilige Verstärkungs- oder Füllstoff respektive das farbgebende Pigment in der gewünschten Form in der Masse vorliegt. Werden Verstärkungs- oder Füllstoffe in Form von Fasern oder Faserrovings zugegeben, so erfolgt die Zugabe möglichst spät, um sicherzustellen, dass in der fließfähigen Masse möglichst lange Faserstücke vorliegen. Ähnliches gilt im Fall von Effektpigmenten, die ebenfalls möglichst spät zugegeben werden, um sicherzustellen, dass sie möglichst wenig mechanisch belastet werden, wenn sie in das Trägerfluid eingebunden werden. Werden unempfindliche Verstärkungs- oder Füllstoffe oder Pigmente verwendet, können diese auch früher aufgegeben werden.

Unabhängig davon wird also mit dem ersten Extruder eine fließfähige, einen Verstärkungs- oder Füllstoff respektive ein farbgebendes Pigment in vorzugsweise hoher Konzentration enthaltende Masse, auch Präparation genannt, hergestellt.

In einem zweiten, parallel arbeitenden Extruder wird eine Polymerschmelze aus einem thermoplastischen Polymer hergestellt, beispielsweise Polypropylen oder einem anderen thermoplastischen Polymer, das Grundlage für die Kunststoffmatrix, die das endgültig hergestellte, kunststoffbasierte Bauteil aufweisen soll, ist. Diese Polymerschmelze wird nun erfindungsgemäß ebenfalls der Coextrusionsvorrichtung zugeführt. Dort werden die fließfähige Masse und die Polymerschmelze nun derart miteinander coextrudiert, dass sich ein Extrudatstrang bildet, in dem die Masse im Extrudatkern liegt, während die Polymerschmelze die Masse vollständig umhüllt. Das Verhältnis Kerndicke zu Hüllendicke kann selbstverständlich durch entsprechende Wahl der Coextrusionsdüse eingestellt werden. Es ergibt sich also ein coextrudierter Strang, bestehend aus einem definiert aufgebauten respektive präparierten Kern und einer definierten Stranghülle. Der Extrudatstrang wird entweder unmittelbar anschließend zerkleinert, um ein Granulat, vorzugsweise natürlich ein Stäbchengranulat zu bilden, was durch entsprechendes Schneiden oder ähnliches erfolgt. Denkbar wäre es grundsätzlich natürlich auch, den Extrudatstrang aufzuwickeln und als Rolle zwischenzulagern, um den Strang zu einem anderen Zeitpunkt zu zerkleinern.

Das erfindungsgemäße Verfahren lässt folglich die Herstellung eines Polymerextrudats zu, das einen gefüllten, vorzugsweise hochgefüllten Kern mit nahezu beliebig einbringbaren Verstärkungs- oder Füllstoffen oder farbgebenden Pigmenten aufweist. Die Verstärkungs- oder Füllstoffe respektive Pigmente sind komplett in der Trägerfluid aufgenommen, wobei der Kern wiederum vollständig in der Polymerhülle gekapselt ist. Dadurch, dass die fließfähige Masse in einem separaten Extruder hergestellt wird, kann sie so optimiert hergestellt werden, dass die Verstärkungs- oder Füllstoffe respektive Pigmente, auch wenn es sich um sehr fragile Stoffe handelt, entsprechend schonend eingebracht werden, so dass sie in der gewünschten Form, sei es hinsichtlich Länge, sei es hinsichtlich Beschaffenheit, im Extrudatkern vorliegen.

Auch die Weiterverarbeitung dieses gefüllten Extrudats kann in einer Weise erfolgen, dass die Verstärkungs- oder Füllstoffe respektive Pigmente auch im fertig hergestellten Bauteil in einer anforderungsgemäßen Form vorliegen. Denn dadurch, dass die Verstärkungs- oder Füllstoffe respektive Pigmente im Extrudatkern aufgenommen sind und diese wiederum von einer hinreichend dicken Polymerhülle umgeben ist, ist sichergestellt, dass nach Aufgabe in den Verarbeitungsextruder zunächst die Polymerhülle aufschmilzt, bevor die Verstärkungs- oder Füllstoffe respektive Pigmente überhaupt in Kontakt mit der Zylinderwand respektive der oder den Extruderschnecken kommen, mithin also mechanisch belastet werden. Da also diese mechanische Belastung erst sehr spät stattfindet, ist sichergestellt, dass die Verstärkungs- oder Füllstoffe respektive Pigmente bis zur endgültigen Verarbeitung durch Spritzen oder ähnlichem ihre Form nur geringfügig ändern, mithin also beispielsweise im Falle von Fasern in der gewünschten Mindestlänge vorliegen respektive im Falle von beispielsweise Effektpigmenten noch in hinreichender Größe oder ähnlichem, so dass sie ihre Wirkung entfalten können.

Als Trägerfluid kann erfindungsgemäß ein Öl oder ein im Extruder aufgeschmolzenes Wachs verwendet werden. Das Trägerfluid muss hinreichend flüssig sein, um eine insgesamt hinreichend fließfähige Masse zu bilden, und um die Verstärkungs- oder Füllstoffe respektive Pigmente homogen darin verteilen zu können. Hierfür ist ein von Haus aus fluides Öl verwendbar, das also bereits flüssig dem Extruder zugegeben wird. Alternativ kann auch ein im Extruder erst aufgeschmolzenes Wachs als Trägerfluid verwendet werden. Der Extruder ist hierzu mit entsprechenden Heizelementen ausgerüstet, die es ermöglichen, das Wachs aufzuschmelzen. Das Öl oder Wachs bilden die Bindematrix, in der die Verstärkungs- oder Füllstoffe respektive Pigmente aufgenommen sind. Da der Anteil an Öl oder Wachs innerhalb der fließfähigen Masse vorzugsweise möglichst gering sein sollte, ist es ohne weiteres möglich, auch solche Trägerfluide, die im fertigen Extrudat noch fluid oder weich vorliegen, zu verwenden.

Alternativ kann erfindungsgemäß auch als Trägerfluid ein im Extruder aufgeschmolzenes thermoplastisches Polymer verwendet werden, so dass folglich sowohl im Extrudatkern als auch in der Extrudathülle eine Polymermatrix gegeben ist. Hierüber kann, wenngleich auch bei Verwendung eines Polymers als Trägerfluid dessen Anteil in der Masse möglichst gering sein sollte, der Gesamtgehalt an Polymer im Extrudat etwas vergrößert werden. Wird als Trägerfluid ein thermoplastisches Polymer verwendet, so kann dieses Polymer dem die Polymerschmelze bildenden Polymer entsprechen, das heißt, dass das Kernmaterial und das Hüllmaterial gleich sind. Alternativ dazu kann das Trägerfluid-Polymer auch unterschiedlich zum Schmelzpolymer sein.

Wie bereits beschrieben können erfindungsgemäße Verstärkungs- oder Füllstoffe in Form von Fasern, insbesondere Glasfasern verwendet werden. Die farbgebenden Pigmente können in Form von Pulvern oder Plättchen verwendet werden, wobei vornehmlich Effektpigmente in Form von Plättchen vorliegen.

Werden als Verstärkungs- oder Füllstoffe Fasern wie beispielsweise Glasfasern verwendet, so können diese dem Extruder bereits in vorgeschnittener Form zugeführt werden. Zweckmäßigerweise erfolgt die Zugabe jedoch in Form eines oder mehrerer Rovings, also von endlosen, von einer Rolle abgewickelten Fasersträngen, die über eine entsprechende Zuführöffnung, beispielsweise eine der atmosphärischen Entlüftung dienende Öffnung, automatisch eingezogen werden, wenn die Schneckenwellen rotieren. Unabhängig davon, ob nun die Fasern in Form von Rovings oder Schnittfasern bzw. Schnittglas zugeführt werden, werden die Fasern im Extruder noch weiter verkürzt, so dass sie in der fertigen, den Extruder verlassenden Masse und damit im Extrudatstrang in der gewünschten Endlänge, beispielsweise ≥ 3 mm, vorliegen. Dabei werden die Fasern oder das Roving respektive das Pulver oder die Plättchen dem ersten Extruder an einer Stelle, die bezogen auf die Länge des Arbeitsteils des Extruders bestehend aus einem Zylinder und wenigstens einer darin rotierenden Schneckenwelle näher zum Ende des Arbeitsteils als zu dessen Anfang liegt, aufgegeben. Das heißt, dass die Fasern bzw. das Roving respektive das Pulver oder die Plättchen erst möglichst spät aufgegeben werden, um sicherzustellen, dass die mechanische Belastung, die insbesondere die Fasern respektive Plättchen erfahren, möglichst gering ist, so dass die Fasern noch möglichst lang sind wie auch die Plättchen noch möglichst ihre ursprüngliche Form beibehalten und in der fließfähigen Masse und damit im Kern des Extrudats möglichst homogen verteilt sind. Bevorzugt wird insbesondere im Hinblick auf die Fasern die Zugabe so vorgenommen, dass die Fasern eine bevorzugte Orientierung in Fließrichtung der Masse aufweisen, mithin also im Kern des Extrudats wenn möglich in Stranglängsrichtung ausgerichtet verlaufen.

Die Fasern werden erfindungsgemäß im Extruder derart bearbeitet, dass sie im Extrudatstrang eine Länge von 2 - 8 mm, insbesondere von 3 - 5 mm aufweisen. Dies kann wie gesagt durch entsprechende Wahl des Aufgabeortes der Schnittfasern respektive des Rovings wie auch die entsprechenden Betriebsparameter, mit denen der erste Extruder betrieben wird, eingestellt werden, wie natürlich auch durch die entsprechende Wahl des Trägerfluids respektive dessen Aufbereitung bzw. Viskosität.

Erfindungsgemäß sollte der Anteil von Trägerfluid in der Masse zwischen 5 - 50 % und der Anteil an Verstärkungs- oder Füllstoff oder Pigment in der Masse 95 - 50 % betragen. Je höher der Verstärkungs- oder Füllstoff- oder Pigmentanteil ist, umso höher gefüllt ist die fließfähige Masse und damit das Extrudat. Bevorzugt wird der Anteil an Verstärkungs- oder Füllstoff respektive Pigment möglichst hoch gewählt, wobei natürlich stets darauf zu achten ist, dass die Masse noch hinreichend fließfähig ist, was auch durch die entsprechende Temperatur des Trägerfluids eingestellt werden kann. Wenn möglich sollte der Anteil an Verstärkungs- oder Füllstoff oder Pigment im Trägerfluid und damit im Kern derart eingestellt werden, dass der Anteil bezogen auf das gesamte Extrudat zwischen 50 - 70 % beträgt. Das heißt, dass dementsprechend natürlich auch die Dicke der Polymerhülle entsprechend einzustellen ist.

Wie bereits beschrieben, wird erfindungsgemäß der Extrudatstrang anschließend bevorzugt zerkleinert, insbesondere zur Erzeugung eines Stäbchengranulats geschnitten, wozu eine entsprechende Schneidvorrichtung oder ähnliches verwendet wird.

Bevorzugt wird des Weiteren eine Coextrusionseinrichtung verwendet, die die Erzeugung mehrerer Extrudatstränge ermöglicht, um einen möglichst hohen Durchsatz zu erzielen. Die mehreren Extrudatstränge können nachfolgend ohne weiteres in einer gemeinsamen Schneidvorrichtung geschnitten werden.

Des Weiteren betrifft die Erfindung ein Extrudat, das gemäß dem beschriebenen Verfahren hergestellt ist. Dieses Extrudat kann in Weiterbildung der Erfindung vorzugsweise ein Stäbchengranulat sein.

Ferner betrifft die Erfindung eine Vorrichtung zur Durchführung des Verfahrens der beschriebenen Art. Diese Vorrichtung umfasst einen ersten Extruder zur Herstellung der fließfähigen Masse, einen zweiten Extruder zur Herstellung einer Polymerschmelze, sowie eine Coextrusionseinrichtung, mit der die beiden Extruder über separate, die Masse bzw. die Polymerschmelze führende Kanäle verbunden sind, sowie eine der Coextrusionseinrichtung nachgeschaltete Zerkleinerungs- oder Wickeleinrichtung.

Die beiden Extruder können parallel zueinander angeordnet sein, denkbar ist es aber auch, sie in einem 90°-Winkel zueinander zu positionieren. Die die Masse bzw. die Polymerschmelze führenden Kanäle können des Weiteren jeweils eigenständige Heizeinrichtungen aufweisen, um die Masse respektive die Polymerschmelze bei Bedarf zusätzlich temperieren zu können respektive um ihre Viskosität für den nachfolgenden Coextrusionsschritt gegebenenfalls noch einstellen zu können.

Der erste und/oder der zweite Extruder ist bevorzugt ein Doppelschneckenextruder, jedoch können grundsätzlich auch andere Extrudertypen verwendet werden, solange eine entsprechende Einbindung der

Verstärkungs- oder Füllstoffe respektive Pigmente in das Trägerfluid respektive die Aufbereitung der Polymerschmelze möglich ist.

Die Coextrusionseinrichtung ist zweckmäßigerweise zur Erzeugung mehrerer Extrudatstränge ausgebildet, was durch entsprechende Ausgestaltung der Extrusionsdüse möglich ist.

Weiterhin kann eine dem ersten Extruder zugeordnete Zuführvorrichtung für ein Roving, für Schnittfasern oder für Pigment vorgesehen sein. Je nachdem, welcher Art der aufzugebende Verstärkungs- oder Füllstoff respektive das Pigment ist, wird die entsprechende Zuführvorrichtung gewählt. Am ersten Extruder ist des Weiteren eine Zuführung vorgesehen, also eine geeignete Öffnung oder ähnliches, zu der die Zuführvorrichtung hin fördert. Diese Zuführung ist am ersten Extruder bevorzugt an einer Stelle, die bezogen auf die Länge des Arbeitsteils des Extruders bestehend aus einem Zylinder und wenigstens einer darin rotierenden Schneckenwelle näher zum Ende des Arbeitsteils als zu dessen Anfang liegt, positioniert. Dies deshalb, um die Fasern bzw. das Roving bzw. das Pigment, sei es in Pulver- oder Plättchenform, möglichst spät zuzuführen, um dessen mechanische Belastung im ersten Extruder gering zu halten. Denkbar ist es natürlich, am Extruder über die Länge des Arbeitsteils verteilt mehrere Zuführungsöffnungen vorzusehen, so dass je nach aufzugebenden Verstärkungs- oder Füllstoff respektive Pigment die entsprechende Zuführungsöffnung gewählt werden kann.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung einer erfindungsgemäßen Vorrichtung zur Durchführung des erfindungsgemäßen Verfahrens,
- Fig. 2: eine geschnittene Prinzipdarstellung eines erfindungsgemäßen Extrudats einer ersten Ausführungsform, und
- Fig. 3: eine geschnittene Prinzipdarstellung eines erfindungsgemäßen Extrudats einer zweiten Ausführungsform.

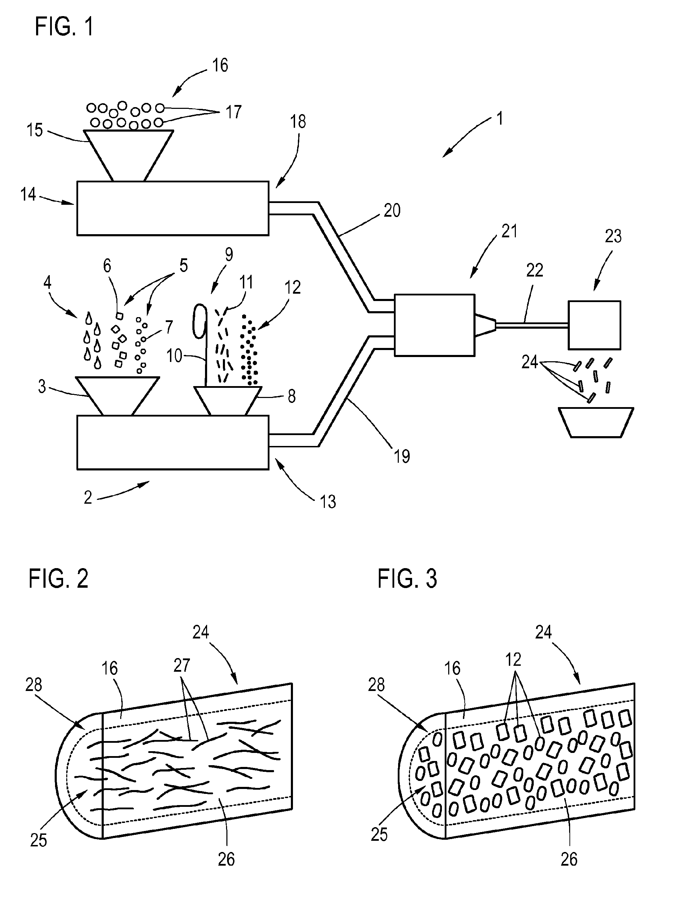

Fig. 1 zeigt eine erfindungsgemäße Vorrichtung 1 zur Herstellung eines erfindungsgemäßen gefüllten, insbesondere hochgefüllten Extrudats. Die Vorrichtung 1 umfasst einen ersten Extruder 2, beispielsweise einen Doppelschneckenextruder, der der Herstellung einer fließfähigen Masse bestehend aus einem Trägerfluid und darin möglichst homogen verteilten Verstärkungs- oder Füllstoffen respektive Pigmenten dient. Der Extruder 2 weist eine erste Zuführung 3 auf, über die das Mittel, das das Trägerfluid bildet respektive dessen Herstellung dient, zugeführt wird. Als Trägerfluid kann entweder ein von Haus aus fluides Medium verwendet werden, beispielsweise ein Öl 4, wie durch die Tropfensymbole in Fig. 1 dargestellt ist. Alternativ hierzu kann auch ein partikelförmig vorliegender Stoff 5 zugeführt werden, bei dem es sich entweder um aufzuschmelzendes Wachs 6, das in Partikelform vorliegt, handelt, wenn das Trägerfluid ein aufgeschmolzenes Wachs sein soll, oder um Polymerpartikel 7, wenn das Trägerfluid ein aufgeschmolzenes Polymer sein soll.

Vorgesehen ist ferner eine zweite Zuführung 8, die der Aufgabe eines Füll- oder Verstärkungsstoffes 9 beispielsweise in Form eines Glasfaserrovings 10 oder in Form von Schnittglas 11 (oder natürlich anderen Faserstoffen als Glas) oder von farbgebenden Pigmenten 12, die in Pulverform oder in Plättchenform aufgegeben werden, dient. Ersichtlich ist die Zuführung 8 relativ nahe am Ausgang 13 des Extruders angeordnet, um sicherzustellen, dass die aufgegebenen Verstärkungs- oder Füllstoffe 9 respektive Pigmente 12 nur für relativ kurze Zeit der mechanischen Belastung im Extruder 2 ausgesetzt sind, gleichzeitig aber noch solange im Extruder 2 sind, dass sie im Trägerfluid, gleich aus welchem Material dieses gebildet wird, möglichst homogen verteilt respektive im Falle der Fasern etwas ausgerichtet aufgenommen sind. Der Extruder 2 verfügt selbstverständlich über entsprechende Heizeinrichtungen um das Trägerfluid entweder entsprechend zu temperieren, sollte es bereits Fluid zugegeben werden, oder um dessen Ausgangsstoff entsprechend aufzuschmelzen, und um ganz grundsätzlich der herzustellenden fließfähigen Masse die entsprechende gewünschte Temperatur zu verleihen.

Die Menge an aufgegebenen respektive erzeugtem Trägerfluid und an aufgegebenem Verstärkungs- oder Füllstoff 9 respektive Pigment 12 richtet sich danach, wie der Anteil an Verstärkungs- oder Füllstoff 9 respektive Pigment 12 in der herzustellenden fließfähigen Masse und letztlich im herzustellenden Endprodukt, hier also dem Extrudat, sein soll. Grundsätzlich kann der Anteil an Trägerfluid in der Masse zwischen 5 - 50 % und der Anteil an Verstärkungs- oder Füllstoff 9 respektive Pigment 12 in der Masse 95 - 50 % betragen. Je höher der Anteil an Verstärkungs- oder Füllstoff respektive Pigment, umso höher gefüllt ist die Masse und umso höher gefüllt ist das erhaltene Extrudat. Bevorzugt wird natürlich eine möglichst hohe Konzentration respektive in hoher Füllgrad innerhalb der Masse, die auch als "Präparation" bezeichnet werden kann.

Die erfindungsgemäße Vorrichtung umfasst des Weiteren einen zweiten Extruder 14, der der Herstellung einer Polymerschmelze dient. Er ist vorzugsweise ebenfalls als Doppelschneckenextruder ausgeführt und weist eine Zuführung 15 auf, über die der Ausgangsstoff 16, hier ein Granulat 17, das aufzuschmelzen ist und der Herstellung der Polymerschmelze dient, aufgegeben wird. Auch dieser Extruder verfügt natürlich über entsprechende Heizeinrichtungen, um das Polymermaterial, in Verbindung mit dem Energieeintrag durch die Schneckenrotation, aufzuschmelzen. Bei dem Polymermaterial 16, also dem Material der Polymerschmelze selbst, kann es sich um das gleiche Material handeln wie bei den Partikeln 7, das der Herstellung des Trägerfluids im ersten Extruder 2 dient. In diesem Fall wird also auch im ersten Extruder 2 eine Polymerschmelze, die jedoch beladen ist mit dem Verstärkungs- oder Füllstoff mit dem Pigment, hergestellt, die aus dem gleichen Material ist wie die im zweiten Extruder 14 hergestellte Polymerschmelze. Dies muss jedoch nicht so sein, vielmehr können sich die beiden Polymere auch unterscheiden.

Am Ausgang 13 des ersten Extruders 2 sowie am Ausgang 18 des zweiten Extruders 14 mündet jeweils ein Kanal 19, 20, über den die fließfähige Masse (Kanal 19) respektive die Polymerschmelze (Kanal 20) vom jeweiligen Extruder 2, 14 zu einer Coextrusionseinrichtung 21 geführt werden. Die beiden Kanäle 19, 20 können, sofern erforderlich, über zusätzliche Heizeinrichtungen verfügen, sollte die Temperatur der Masse respektive der Polymerschmelze im jeweiligen Kanal 19, 20 variiert oder eingestellt werden müssen.

Die Coextrusionseinrichtung 21 ist nun derart ausgeführt respektive verfügt über eine oder mehrere entsprechende Düsen, die es ermöglichen, aus der Masse und der Polymerschmelze einen Extrudatstrang 22 zu extrudieren, dessen Kern von der Masse gebildet ist, und dessen außenseitige Umhüllung von der Polymerschmelze gebildet ist. Im Inneren ist also die Masse bestehend aus Trägerfluid und Verstärkungs- oder Füllstoff 9 respektive Pigment 12, der Außenmantel ist von der reinen Polymerschmelze gebildet. Beispiele eines solchen Extrudatstrangs 22 respektive daraus hergestellter einzelner Extrudatstücke in Form eines Stäbchengranulats sind nachfolgend in den Fig. 2 und 3 beschrieben.

Der Extrudatstrang 22 wird im gezeigten Ausführungsbeispiel einer Schneideinrichtung 23 zugeführt, die beispielsweise unter Verwendung geeigneter rotierender Messer oder ähnlichem den Extrudatstrang 22 zur Bildung einzelner Stäbchengranulate 24 zerteilt. Anstelle einer Schneideinrichtung 23 wäre es auch denkbar, einen Extrudatstrang 22 mit einer nicht näher gezeigten Wickeleinrichtung zunächst aufzuwickeln, um ihn zu einem späteren Zeitpunkt zu zerteilen.

Wenngleich in der Prinzipdarstellung gemäß Fig. 1 eine Coextrusionseinrichtung 21 gezeigt ist, die der Bildung eines Extrudatstrangs 22 dient, wäre es selbstverständlich auch denkbar, eine Coextrusionseinrichtung 21 mit einer entsprechenden Düsenanordnung zu verwenden, die die Bildung mehrerer identisch aufgebauter Extrudatstränge 22 ermöglicht, so dass sich ein hoher Durchsatz erzielen lässt. Die einzelnen Extrudatstränge 22 können wiederum in einer gemeinsamen Schneideinrichtung 23 geschnitten respektive über eine gemeinsame Wickelvorrichtung gewickelt werden.

Fig. 2 zeigt exemplarisch eine Schnittansicht durch ein Extrudat in Form des Stäbchengranulats 24. In der Prinzipdarstellung ist das Stäbchengranulat 24 im Längsschnitt gezeigt. Dargestellt ist der Kern 25, bestehend aus einer Trägerfluidmatrix 26, die aus dem in diesem Zeitpunkt wieder erhärteten Trägerfluidmaterial 6 (Wachs) oder 7 (Polymer) besteht, oder - in sehr geringem Anteil - dem Öl 4, das relativ zähflüssig ist und natürlich lediglich benetzend wirkt, um die aufgenommenen Verstärkungs- oder Füllstoffe respektive Pigmente zu binden. Der Kern 25 besteht des Weiteren im gezeigten Beispiel aus Fasern 27, die entweder aus dem Roving 10 oder den Schnittfasern 11 gebildet wurden. Das Roving 10 respektive Schnittfasern 11 wurden im ersten Extruder 2 durch die mechanische Beanspruchung noch etwas verkürzt, resultierend aus der Scherung an der Zylinderwand respektive der mechanischen Beanspruchung, so dass die Länge der Fasern 27 zwischen 2 - 8 mm, vorzugsweise zwischen 3 - 5 mm beträgt. Das Stäbchengranulat 24 kann im gezeigten Beispiel eine Länge von 20 mm besitzen, abhängig natürlich davon, wie es in der Schneideinrichtung 23 geschnitten wird. Ersichtlich liegen die Fasern 27 mit einer groben Ausrichtung zur Längsachse des Stäbchengranulats 24, was durch Einstellung entsprechender Arbeits- und Zuführungsparameter im respektive zum Extruder 2 eingestellt werden kann.

Gezeigt ist ferner der Außenmantel 28 bestehend aus dem Polymermaterial 16, das nunmehr ebenfalls wieder erhärtet ist. Ersichtlich umgibt der Außenmantel 28 den Kern 25 vollständig, bettet diesen also komplett ein. Dies führt dazu, dass zwangsläufig auch die Fasern 27 komplett gekapselt sind und - wenn dieses Stäbchengranulat 24 im Rahmen seiner Verarbeitung in einem anderen Extruder aufgeschmolzen wird - es zunächst zum Aufschmelzen des Außenmantels 28 kommt, bis erstmals die Fasern 27 überhaupt in Berührung mit der Zylinderwand kommen und mechanisch beansprucht werden. Dies ermöglicht es, sicherzustellen, dass im Endprodukt, beispielsweise einem Kunststoffspritzteil oder einer Kunststoffbeschichtung oder ähnlichem, die Fasern 27 noch mit hinreichender Faserlänge vorliegen.

Fig. 3 zeigt ein weiteres Ausführungsbeispiel des Stäbchengranulats 24. Auch hier ist wiederum ein Kern 25 bestehend aus der Trägerfluidmatrix 26 und im gezeigten Beispiel Pigmenten 12, hier in Form von Plättchen, also Effektpigmenten, vorgesehen. Der Kern 25 ist wiederum von einem Außenmantel 28 bestehend aus dem Polymer 16 vollständig umgeben. Die Pigmente in Form der Plättchen liegen im Wesentlichen homogen verteilt im Kern 25. Sie weisen noch eine hinreichende Größe auf, da sie, wie bereits zur Fig. 1 und auch zu den Fasern gemäß Fig. 2 beschrieben, relativ spät dem Extruder 2 zugeführt werden und folglich nur eine geringe mechanische Beanspruchung erfahren. Wird dieses Stäbchengranulat 24 in einem Verarbeitungsextruder verarbeitet, so wird auch hier zunächst der Außenmantel 28, also das Polymer aufgeschmolzen, erst dann kommen die Pigmente 12 respektive die Plättchen erstmals in Berührung mit der Zylinderwand. Damit ist sichergestellt, dass sie im Rahmen der Granulatverarbeitung ebenfalls nur eine relativ geringe mechanische Belastung erfahren, bis sie den Extruder verlassen und in das Endprodukt umgeformt werden, sei es durch Spritzen, durch Beschichten etc. Sie liegen dann folglich noch in hinreichender Größe vor, um ihren optischen Effekt liefern zu können. Bei der Trägerfluidmatrix 26 kann es sich wiederum um eines der Materialien 4, 6 oder 7 handeln.

Wenngleich in den gezeigten Beispielen exemplarisch Glasfasern und effekt-plättchenförmige Effektpigmente gezeigt sind, sind selbstverständlich beliebige andere Verstärkungs- oder Füllstoffe respektive Pigmente zuführbar. Es können Fasern aus anderen Materialien zugeführt werden, wie auch Verstärkungs- oder Füllstoffe, die nicht in Faserform vorliegen, in den Kern 25 homogen eingebunden werden können. Auch können natürlich andere Farb- oder Effektpigmente als die in Plättchenform beschriebenen Pigmente in den Kern 25 eingebracht werden. Allen hergestellten Extrudaten 22 respektive Stäbchenpigmenten 24 gemein ist jedoch der coextrudierte zweischichtige Aufbau bestehend aus dem gefüllten respektive hochgefüllten Kern 25 aus einem Verstärkungs- oder Füllstoff respektive Pigment und einer Trägerfluidmatrix sowie dem Außenmantel 28 aus dem Polymer 16.

Bei den angegebenen Prozentanteilen handelt es sich jeweils um Gewichtsprozent.

## Patentansprüche

1. Verfahren zur Herstellung eines gefüllten Polymerextrudats, **dadurch gekennzeichnet, dass** in einem ersten Extruder (2) eine fließfähige Masse aus einem Trägerfluid und diesem beigegebenen Verstärkungs- oder Füllstoffen (9) oder farbgebenden Pigmenten (12) und in einem zweiten Extruder (14) eine Polymerschmelze aus einem thermoplastischen Polymer (16) hergestellt wird, wobei die Masse und die Polymerschmelze anschließend in einem Coextrusionsschritt derart coextrudiert werden, dass die Polymerschmelze die den Kern des erzeugten Extrudatstrangs (22) bildende Masse umschließt.

2. Verfahren nach Anspruch 1, **dadurch gekennzeichnet, dass** als Trägerfluid ein Öl (4) oder ein im Extruder ausgeschmolzenes Wachs (6) oder thermoplastisches Polymer (7) verwendet wird.

3. Verfahren nach Anspruch 2, **dadurch gekennzeichnet, dass** das das Trägerfluid bildende Polymer (7) dem die Polymerschmelze bildenden Polymer (16) entspricht, oder unterschiedlich dazu ist.

4. Verfahren nach einem der vorangehenden Ansprüche, **dadurch gekennzeichnet, dass** die Verstärkungs- oder Füllstoffe (9) in Form von Fasern (10, 11), insbesondere Glasfasern, und die farbgebenden Pigmente in Form von Pulver oder Plättchen verwendet werden.

5. Verfahren nach Anspruch 4, **dadurch gekennzeichnet, dass** dem ersten Extruder (2) ein Roving (10) zugeführt wird, aus dem im Extruder (2) die Fasern (27) erzeugt werden.

6. Verfahren nach Anspruch 4 oder 5, **dadurch gekennzeichnet, dass** die Fasern (11) oder das Roving (10), oder das Pigment (12) dem ersten Extruder (2) an einer Stelle, die bezogen auf die Länge eines Arbeitsteils des Extruders (2) bestehend aus einem Zylinder und wenigstens einer darin rotierenden Schneckenwelle näher zum Ende des Arbeitsteils als zu dessen Anfang liegt, aufgegeben werden.

7. Verfahren nach einem der Ansprüche 4 bis 6, **dadurch gekennzeichnet, dass** die Fasern (10, 11) im Extruder derart bearbeitet werden, dass sie im Extrudatstrang (22) eine Länge von 2 bis 8 mm, insbesondere 3 - 5 mm aufweisen.

8. Verfahren nach einem der vorangehenden Ansprüche, **dadurch gekennzeichnet, dass** der Anteil von Trägerfluid in der Masse zwischen 5% - 50% und der Anteil an Verstärkungs- oder Füllstoff oder Pigment in der Masse 95% - 50% beträgt.

9. Verfahren nach einem der vorangehenden Ansprüche, **dadurch gekennzeichnet, dass** der Extrudatstrang (22) anschließend zerkleinert wird, insbesondere zur Erzeugung eines Stäbchengranulats (24) geschnitten wird.

10. Verfahren nach einem der vorangehenden Ansprüche, **dadurch gekennzeichnet, dass** eine Coextrusionseinrichtung (21) verwendet wird, die die Erzeugung mehrerer Extrudatstränge ermöglicht.

11. Extrudat, hergestellt nach dem Verfahren nach einem der vorangehenden Ansprüche.

12. Extrudat nach Anspruch 11, **dadurch gekennzeichnet, dass** es ein Stäbchengranulat (24) ist.

13. Vorrichtung zur Durchführung des Verfahrens nach einem der vorangehenden Ansprüche, umfassend einen ersten Extruder (2) zur Herstellung der fließfähigen Masse, einen zweiten Extruder (14) zur Herstellung der Polymerschmelze, sowie eine Coextrusionseinrichtung (21), mit der die beiden Extruder (2, 14) über separate, die Masse bzw. die Polymerschmelze führende Kanäle (19, 20) verbunden sind, sowie eine der Coextrusionseinrichtung (21) nachgeschaltete Zerkleinerungs- oder Wickeleinrichtung (23).

14. Vorrichtung nach Anspruch 13, **dadurch gekennzeichnet, dass** der erste und/oder der zweite Extruder (2, 14) ein Doppelschneckenextruder ist.

15. Vorrichtung nach Anspruch 13 oder 14, **dadurch gekennzeichnet, dass** die Coextrusionseinrichtung (21) zur Erzeugung mehrerer Extrudatstränge ausgebildet ist.

16. Vorrichtung nach einem der Ansprüche 13 bis 15, **dadurch gekennzeichnet, dass** eine dem ersten Extruder (2) zugeordnete Zuführvorrichtung für ein Roving, für Schnittfasern oder für Pigment vorgesehen ist.

17. Vorrichtung nach einem der Ansprüche 13 bis 16, **dadurch gekennzeichnet, dass** am ersten Extruder (2) eine Zuführung (8) für Fasern (11) oder das Roving (10), oder das Pigment (12)an einer Stelle, die bezogen auf die Länge eines Arbeitsteils des Extruders (2) bestehend aus einem Zylinder und wenigstens einer darin rotierenden Schneckenwelle näher zum Ende des Arbeitsteils als zu dessen Anfang liegt, vorgesehen ist.
